# EUROPÄISCHE PATENTSCHRIFT

(11) **EP 3 886 277 B1**
(45) Veröffentlichungstag und Bekanntmachung des Hinweises auf die Patenterteilung: **19.07.2023**
(21) Anmeldenummer: 21151300.7
(22) Anmeldetag: 13.01.2021
(51) Int. Cl.: H02G 3/08, H02G 15/10, H05K 9/00

(54) **ELEKTRISCH GESCHIRMTES GEHÄUSE**
ELECTRICALLY SHIELDED HOUSING
BOÎTIER À BLINDAGE ÉLECTRIQUE

(30) Priorität: 27.03.2020 DE 102020108509
(43) Veröffentlichungstag der Anmeldung: 29.09.2021
(73) Patentinhaber: Auto-Kabel Management GmbH, 79688 Hausen i.W. (DE)
(72) Erfinder: LORENZ, Thomas, 42549 Velbert (DE); REEPEN, Richard, 47441 Moers (DE)
(74) Vertreter: Cohausz & Florack

(56) Entgegenhaltungen:
- DE-A1- 2 932 612
- US-A- 5 180 314
- US-A- 5 306 870
- US-A- 5 575 667

## Beschreibung

Der Gegenstand betrifft ein elektrisch geschirmtes Gehäuse sowie ein System mit einem solchen Gehäuse.

Insbesondere in automotiven Anwendungen kommt der elektromagnetischen Verträglichkeit von Bauteilen eine immer größere Bedeutung zu. Dies liegt zum einen an der Einführung eines 48 V-Bordnetzes und zum anderen an der zunehmenden Elektrifizierung des Antriebsstrangs. Bei beiden Anwendungen kommt es aufgrund der erhöhten Spannungen sowie erhöhter Übertragungsleistungen zu immer höheren Anforderungen an die Abstrahlcharakteristik der die übertragene Leistung leitenden Kabel und Komponenten.

Geschirmte Kabel an sich sind hinlänglich bekannt. Sie sind gebildet durch einen Innenleiter, der mit einer inneren Isolation ummantelt ist. Auf der inneren Isolation liegt ein Schirmungsleiter, insbesondere in der Form eines Leitergeflechts, einer Folie oder einer Kombination hieraus. Auf dem Schirmungsleiter ist eine äußere Isolation aufgebracht. Solange das Kabel unverletzt ist, ist dessen elektromagnetische Abstrahlcharakteristik nicht zu beanstanden. Problematisch wird es jedoch, wenn die Kabel miteinander oder mit anderen elektrischen Komponenten zu kontaktieren sind. In diesem Fall wird der Schirmungsleiter nahezu zwangsläufig beschädigt und geöffnet, so dass der die Leistung führende Innenleiter ungeschirmt ist. Insbesondere im Bereich von Übergabepunkten zwischen einzelnen Kabeln, als auch der Verbindung des Kabels mit anderen elektrischen Komponenten, bespielweise im Bereich von elektrischen Verteilern, Sicherungen und dergleichen, ist dennoch eine ausreichende Schirmung zu gewährleisten.

Um eine solche Schirmung zu gewährleisten, sind bereits Gehäuse bekannt, die mit einer metallischen Beschichtung beschichtet sind. Der Schirmungsleiter, der in das Gehäuse hineingeführten Kabel wird mit der metallischen Beschichtung des Gehäuses kontaktiert, so dass das elektrische Potential des Schirmungsleiters mit der metallischen Beschichtung des Gehäuses kurzgeschlossen ist.

Die Schichtdicke der metallischen Beschichtung beträgt in der Regel nur wenige Mikrometer. Der effektive Leiterquerschnitt ist daher zumindest eine Größenordnung kleiner als die sonst üblichen Leiterquerschnitte. Die damit einhergehenden hohen ohmschen Verluste auf der Schirmungsleiter im Bereich des Gehäuses führen zu teilweise unerwünschten Effekten.

Dem Gegenstand lag somit die Aufgabe zugrunde, ein elektrisches geschirmtes Gehäuse sowie ein System mit einem solchen Gehäuse zur Verfügung zu stellen, welches sich nicht negativ auf die elektromagnetische Verträglichkeit des Bordnetzes auswirkt.

Diese Aufgabe wird durch eine Baugruppe nach Anspruch 1 sowie ein System nach Anspruch 7 gelöst.

Das gegenständliche Gehäuse hat einen Gehäusekörper. Dieser Gehäusekörper ist gebildet durch Gehäuseaußenwände, die ein Aufnahmevolumen insbesondere vollständig umschließen. Innerhalb des Aufnahmevolumens, auch das Innere des Gehäuses genannt, kann zumindest ein elektrisches Bauteil angeordnet sein. Dieses elektrische Bauteil kann eine Anschlussklemme, eine Verteilschiene, eine Sicherung, ein Schalter, ein elektronisches Bauteil oder dergleichen als auch eine Kombination sowie eine Mehrzahl der genannten Bauteile sein. Das elektrische Bauteil dient zur Kontaktierung der Leitung eines oder mehrerer in das Gehäuse hineingeführten Kabel. Diese Kabel sind geschirmte Kabel mit dem oben genannten Aufbau. Innerhalb des Gehäuses kann der Innenleiter der Kabel kontaktiert werden. Der Innenleiter des Kabels liegt frei, so dass das Gehäuse die Schirmungsfunktion des Schirmungsleiters des geschirmten Kabels übernehmen muss.

Um das zumindest ein Kabel in den Gehäusekörper einführen zu können, ist an dem Gehäusekörper eine Kabeldurchführung vorgesehen. Bevorzugt um zumindest zwei Kabel innerhalb des Gehäusekörpers miteinander verbinden zu können, hat der Gehäusekörper zwei Kabeldurchführungen, durch die jeweils ein Kabel geführt werden kann. Eine Kabeldurchführung kann mit einer Kabeltülle und/oder einer Zugentlastung bestückt sein.

Der Grundkörper ist aus einem Kunststoff gebildet. Dabei kann der Grundkörper in einem Spritzgussprozess oder einem 3D-Druckprozess hergestellt werden. Um eine metallische Schirmung zu gewährleisten, hat der Gehäusekörper an zumindest einer seiner Mantelflächen eine metallische Beschichtung. Somit kann der Gehäusekörper auf seiner metallischen Beschichtung das elektrische Potential des Schirmungsleiters des in das Gehäuse eingeführten Kabels oder der Schirmungsleiter, der in das eine Gehäuse eingeführten Kabel führen, wenn die Beschichtung mit dem Schirmungsleiter kontaktiert ist.

Um die ohmschen Verluste entlang der metallischen Beschichtung zu verringern wird vorgeschlagen, dass eine Bypassleitung zumindest zwischen den Kabeldurchführungen innerhalb des Aufnahmevolumens geführt ist. Die Bypassleitung dient zum elektrischen Leiten des Potentials der metallischen Beschichtung und mithin des Schirmungsleiters des Kabels, welches in das Gehäuse eingeführt wurde.

Aus diesem Grunde ist die Bypassleitung elektrisch mit der metallischen Beschichtung kurzgeschlossen. Die Bypassleitung kann als Leiter eines Bypasskabels gebildet sein. Durch den Kurzschluss mit der metallischen Beschichtung stellt die Bypassleitung einen Kurzschluss zwischen den Kabeldurchführungen her. Der Leiterquerschnitt der Bypassleitung kann dabei um Größenordnungen größer sein, als der effektive Leiterquerschnitt der metallischen Beschichtung. Die Bypassleitung kann einen Leitungsquerschnitt zwischen 1,5cm² und 25cm² aufweisen. Hierdurch werden die ohmschen Verluste des Schirmungsleiters zwischen den beiden Kabeldurchführungen minimiert, so dass eine effektive Schirmung auch über das Gehäuse hinweg zwischen zwei Kabeln möglich ist. Der Bypassleiter kann darüber hinaus nicht nur zwischen den Durchführungen, sondern auch an einer oder mehreren über das Gehäuse verteilt liegenden Stellen mit der Beschichtung kontaktiert sein.

Gemäß einem Ausführungsbeispiel wird vorgeschlagen, dass im Bereich der jeweiligen Kabeldurchführungen, insbesondere an den inneren Mantelflächen der Kabeldurchführungen, ein elektrischer Kontaktbereich für einen Schirmungsleiter eines in die Kabeldurchführung einführbaren Kabels gebildet ist. Der Kontaktbereich ermöglicht es, die metallische Beschichtung mit dem Schirmungsleiters des in die Kabeldurchführung eingeführten Kabels herzustellen. Der Kontaktbereich kann auch teilweise aus der metallischen Beschichtung selbst gebildet sein. Insbesondere kann die metallische Beschichtung auch entlang der inneren Mantelfläche der Kabeldurchführung gebildet sein. Dadurch entsteht durch beispielsweise ein Verpressen des in die Kabeldurchführung eingeführten Kabels in der Kabeldurchführung ein unmittelbarer Kontakt zwischen dem Schirmungsleiter und der metallischen Beschichtung und somit zu einem Kurzschluss, so dass die metallische Beschichtung auf dem elektrischen Potential des Schirmungsleiters liegt.

Gemäß der Erfindung, die Bypassleitung mit dem Kontaktbereich unmittelbar elektrisch verbunden ist. Der Kontaktbereich dient einerseits zum Kurzschließen des Schirmungsleiters des eingeführten Kabels mit der metallischen Beschichtung und andererseits zum Kurzschließen der metallischen Beschichtung mit der Bypassleitung. Der Kontaktbereich kann die Bypassleitung insbesondere klemmend aufnehmen. Auch ist es möglich, dass die Bypassleitung stoffschlüssig mit dem Kontaktbereich verbunden ist. Der Kontaktbereich kann sich ausgehend von der Kabeldurchführung in der Form einer Anschlusslasche, einer Anschlussfahne oder dergleichen in das Innere des Gehäuses hinein erstrecken. Insbesondere dort kann der Kontaktbereich zur Verbindung mit der Bypassleitung, beispielsweise klemmend oder mittels Stoffschluss gebildet sein.

Gemäß einem Ausführungsbeispiel wird vorgeschlagen, dass die Bypassleitung im Inneren des Aufnahmevolumens von einem Isolator umgeben ist. Die Bypassleitung kann als Kabelseele eines Bypasskabels gebildet sein. Das Bypasskabel kann aus der Bypassleitung und der Ummantelung, welche als Isolator gebildet ist, gebildet sein. Um zu vermeiden, dass die elektrischen Bauteile im Inneren des Aufnahmevolumens mit dem Potential des Schirmungsleiters, der metallischen Beschichtung als auch der Bypassleitung in Kontakt kommen, ist der Isolator vorgesehen.

Gemäß einem Ausführungsbeispiel wird vorgeschlagen, dass die innere Mantelfläche einer jeweiligen Kabeldurchführung metallisch beschichtet ist. Durch diese metallische Beschichtung der Kabeldurchführung kann ein unmittelbarer Kontakt zwischen einem Schirmungsleiter eines eingeführten Kabels und der metallischen Beschichtung hergestellt werden. Die metallische Beschichtung ist insbesondere durchgehend von der inneren und/oder äußeren Mantelfläche des Gehäuses hin zu der inneren Mantelfläche der Kabeldurchführung gebildet.

Gemäß einem Ausführungsbeispiel wird vorgeschlagen, dass der Gehäusekörper an seiner inneren Mantelfläche und/oder seiner äußeren Mantelfläche mit der metallischen Beschichtung beschichtet ist. Ist die innere Mantelfläche des Gehäusekörpers beschichtet, so dient die Gehäusewand des Gehäusekörpers, welche bevorzugt aus einem Kunststoff gebildet ist, gleichzeitig als mechanischer Träger und Isolator. Das Gehäuse isoliert somit die elektrische Beschichtung entlang der inneren Mantelfläche gegenüber der Umwelt. Auch ist eine Beschichtung an der äußeren Mantelfläche möglich.

Gemäß einem Ausführungsbeispiel wird vorgeschlagen, dass die metallische Beschichtung elektrochemisch aufgebracht ist. Insbesondere kann die metallische Beschichtung nasschemisch aufgebracht werden. Der Gehäusekörper kann aus einem Kunststoff gebildet sein und in einem nasschemischen Tauchprozess mit der metallischen Beschichtung beschichtet werden. Die metallische Beschichtung kann auch in der Form einer Pulverbeschichtung, einer Lackierung oder dergleichen erfolgen.

Es versteht sich, dass auf der metallischen Beschichtung an der inneren und/oder äußeren Mantelfläche noch ein zusätzlicher Isolator aufgebracht sein kann. Die metallische Beschichtung kann somit sandwichartig zwischen der Gehäusewand und einer inneren und/oder äußeren Isolationsschicht aufgebracht sein.

Gemäß einem Ausführungsbeispiel wird vorgeschlagen, dass der Gehäusekörper aus einem Grundkörper und einem Verschlusskörper gebildet ist. Ein Gehäusekörper kann wannenförmig gebildet sein und der Verschlusskörper kann deckelförmig gebildet sein. Grundkörper und Verschlusskörper können formschlüssig miteinander verbindbar sein, so dass diese einen abgeschlossenen Gehäusekörper bilden. Die Kabeldurchführung ist bevorzugt im Grundkörper, kann jedoch auch im Verschlusskörper vorgesehen sein.

Gemäß einem Ausführungsbeispiel wird vorgeschlagen, dass der Gehäusekörper mittels eines 3D-Druckprozesses hergestellt wird. Dabei kann unmittelbar während des Druckens die metallische Beschichtung an zumindest einer der Mantelflächen des Gehäusekörpers aufgebracht werden.

Ein weiterer Aspekt ist ein System nach Anspruch 7.

Insbesondere ein Kontaktbereich im Bereich der Kabeldurchführung wird in unmittelbarem Kontakt mit dem Schirmungsleiter gebracht. Dies kann beispielsweise durch die ohnehin vorzusehende Zugentlastung erfolgen. Auch kann ein sonstiges Befestigen, insbesondere Verklemmen, Verschrauben oder dergleichen erfolgen. Nachfolgend wird der Gegenstand anhand einer Ausführungsbeispiele zeigenden Zeichnung näher erläutert. In der Zeichnung zeigen:
- Fig. 1: ein geschirmtes elektrisches Kabel;
- Fig. 2: eine Ansicht eines gegenständlichen Gehäuses;
- Fig. 3: eine Schnittansicht eines gegenständlichen Systems;
- Fig. 4a, b: Schnittansichten von Kabeldurchführungen.

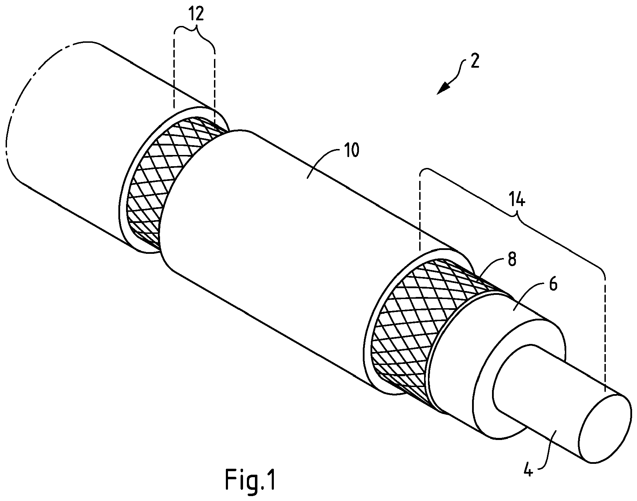

Fig. 1 zeigt ein elektrisches Kabel 2. Das in Fig. 1 gezeigte Kabel 2 ist ein einadriges Kabel. Es versteht sich, dass gegenständlich auch mehradrige Kabel Verwendung finden können und mit allen hier beschriebenen allgemeinen und speziellen Ausführungsbeispielen und Ansprüchen kombinierbar sind. Bei mehradrigen Kabeln kann jede einzelne Ader in der nachfolgend beschriebenen Art und Weise geschirmt sein oder die Adern können gemeinsam mit einem einzigen Schirm versehen sein.

Das gezeigte Kabel 2 umfasst eine Ader 4. Die Ader 4 kann als Litzenleitung oder als Vollmaterialleitung gebildet sein. Die Ader 4 ist ummantelt von einer inneren Isolation 6. Um die innere Isolation 6 ist ein Schirmungsleiter 8 gelegt. Der Schirmungsleiter 8 kann als Leitergeflecht und/oder als Folie gebildet sein. Der Schirmungsleiter 8 ist ummantelt von einer äußeren Isolation 10. Die innere Isolation 6 als auch die äußere Isolation 10 können aus einem nicht leitenden Kunststoff gebildet sein.

Das Kabel 2 kann in einem mittigen Bereich 12 abisoliert sein. Das Kabel 2 kann in einem stirnseitigen Bereich 14 abisoliert sein. Das Kabel 2 kann mit dem Bereich 12 oder dem Bereich 14 in einer Kabeldurchführung eines Gehäuses, wie es nachfolgend beschrieben wird, angeordnet sein, so dass der Schirmungsleiter 8 mit einer metallischen Beschichtung des Gehäuses kurzgeschlossen ist.

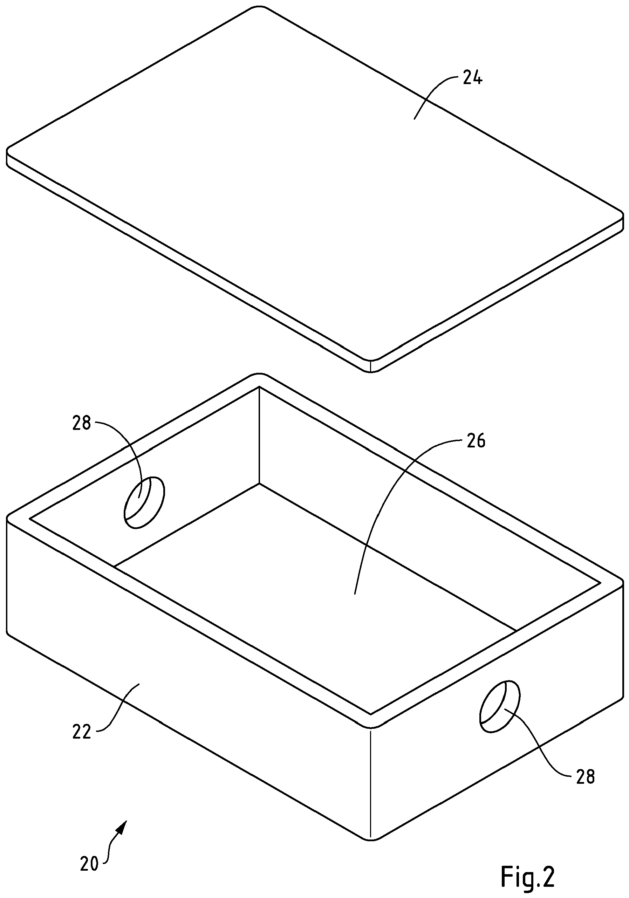

Fig. 2 zeigt eine schematische Ansicht eines Gehäuses 20. Das Gehäuse 20 hat einen aus einem Grundkörper 22 und einem Verschlusskörper 24 gebildeten Gehäusekörper. Innerhalb des Grundkörpers 22 ist ein Aufnahmevolumen 26 vorgesehen. In zumindest einer von vorzugsweise voneinander verschiedenen Gehäusewänden des Grundkörpers 22 und/oder des Verschlusskörpers 24 können Kabeldurchführungen 28 vorgesehen sein. Die Kabeldurchführungen 28 durchbrechen die Wand des Gehäuses 20. In den Kabeldurchführungen 28 kann ein Kabel 2 mit einem Bereich 12 oder einem Bereich 14 angeordnet sein.

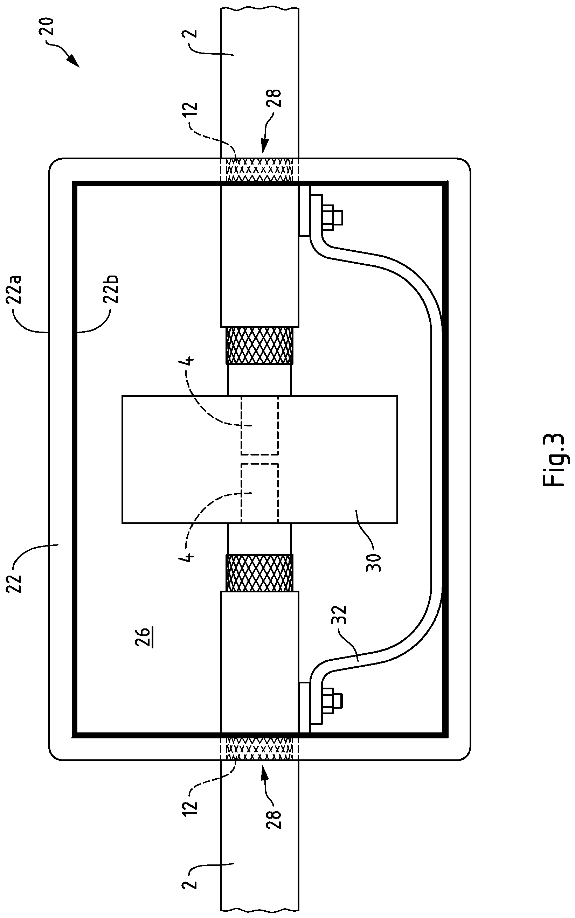

Innerhalb des Aufnahmevolumens 26 kann ein elektrisches Bauteil, beispielsweise eine Teilschiene, eine Sicherung, ein elektronisches Bauteil oder dergleichen angeordnet sein, wie im Zusammenhang mit Fig. 3 beschrieben werden wird.

Mithilfe des Verschlusskörpers 24 lässt sich das Aufnahmevolumen 26 im Grundkörper 22 verschließen. Hierzu kann der Verschlusskörper 24 zumindest formschlüssig gegenüber dem Grundkörper 22 verrasten.

Fig. 3 zeigt eine schematische Draufsicht auf ein System mit einem Gehäuse 22 und zwei in das Gehäuse hineingeführten Kabeln 2. Zu erkennen ist, dass die Kabel 2 mit ihren Bereichen 12 in den Kabeldurchführungen 28 angeordnet sind. Die Kabeldurchführungen 28 haben innere Mantelflächen, die in Kontakt mit dem Schirmungsleiter 8 in den Bereichen 12 sind. Zu erkennen ist in der Fig. 3, dass der Grundkörper 22 aus einer äußeren Wand 22a und einer inneren metallischen Beschichtung 22b gebildet ist. Die metallische Beschichtung 22b ist an der inneren Mantelfläche der Wand 22a vorgesehen. Insbesondere ist die Beschichtung 22b vollflächig an den Seitenwänden und dem Boden des Grundkörpers 22. Darüber hinaus kann die Beschichtung 22b auch an der Innenwand des Verschlusskörpers 24 vorgesehen sein und mit der metallischen Beschichtung 22b des Grundkörpers kurzgeschlossen sein. Somit bildet die metallische Beschichtung 22b im verschlossenen Zustand des Gehäuses 20 eine vollständig umlaufende Schirmung für die Kabel 2 sowie ein elektrisches Bauteil 30 im Inneren des Gehäuses 20.

Die Kabel 2 sind in das Innere des Gehäuses eingeführt und elektrisch im Bereich der Kabeldurchführungen 28 sind die Schirmungsleiter 8 mit der metallischen Beschichtung 22b kurzgeschlossen. Im Aufnahmevolumen 26 liegen die Kabel 2 mit ihren Adern 4 an dem elektrischen Bauteil 30 an. Die Adern 4 sind weder isoliert noch geschirmt, so dass eine zusätzliche Schirmung notwendig ist, die durch die metallische Beschichtung 22b bereitgestellt wird.

Das elektrische Bauteil 30 kann beispielsweise eine Schalteinrichtung oder eine Sammelschiene sein, über die die Adern 4 miteinander kurzgeschlossen oder verschaltet werden können.

Ferner ist in der Fig. 3 eine Bypassleitung 32 zu erkennen. Die Bypassleitung 32 erstreckt sich zwischen zumindest zwei Kabeldurchführungen 28. Die Bypassleitung 32 ist elektrisch kurzgeschlossen mit der metallischen Beschichtung 22 und somit auch den Schirmungsleitern 8. Dieser Kurzschluss kann im Bereich der Kabeldurchführungen 28 erfolgen. Über die Bypassleitung 32 wird ein Strom der Schirmungsleiter 8 im Inneren 26 des Gehäuses 20 geführt. Der Leitungsquerschnitt der Bypassleitung 32 ist dabei erheblich größer als ein effektiver Leitungsquerschnitt einer metallischen Beschichtung 22b. Somit ist ein ohmscher Verlust entlang des Gehäuses 20 für den Schirmungsleiter 8 durch die Bypassleitung 32 gegenüber einem Gehäuse 20 ohne Bypassleitung 32 erheblich reduziert.

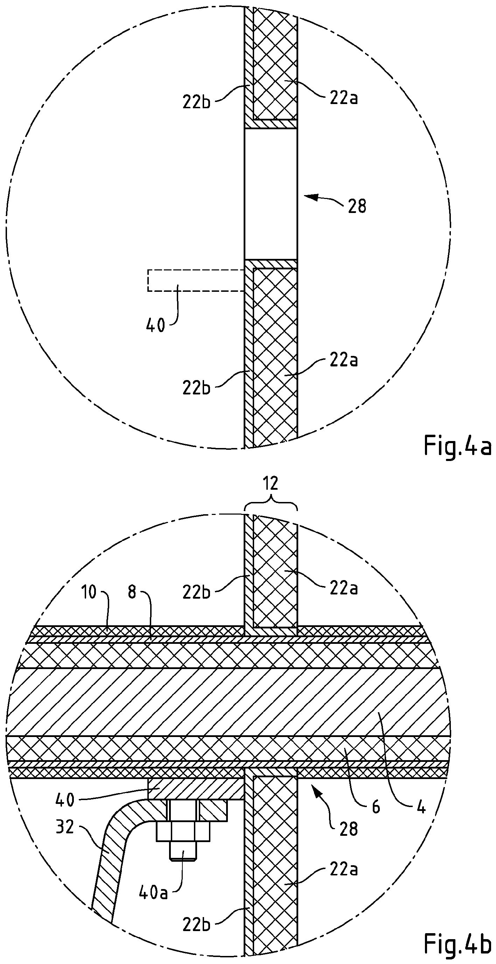

Eine Kontaktierung sowohl des Schirmungsleiters 8 als auch der Bypassleitung 32 ist in den Fig. 4a, 4b gezeigt.

Fig. 4a zeigt schematisch einen Querschnitt durch eine Kabeldurchführung 28. Zu erkennen ist, dass die Kabeldurchführung 28 im Bereich ihrer inneren Mantelfläche mit der metallischen Beschichtung 22b beschichtet ist. Die metallische Beschichtung 22b erstreckt sich ausgehend von der inneren Mantelfläche der Kabeldurchführung 28 in das Innere des Gehäuses 20 und liegt an der inneren Mantelfläche der Wand 22a an.

Optional kann eine Anschlussfahne 40 ausgehend von der metallischen Beschichtung 22b, insbesondere im Bereich der Kabeldurchführung 28 sich in das Innere des Gehäuses 20 erstrecken.

Im montierten Zustand ist, wie in Fig. 4b zu erkennen, das Kabel 2 in seinem Bereich 12 mit dem Schirmungsleiter 8 an der metallischen Beschichtung 22b an der inneren Mantelfläche der Kabeldurchführung 28 angeordnet. Dies ist insbesondere eine klemmende Aufnahme. Die genaue Befestigung des Kabels 2 in der Kabeldurchführung 28 kann in herkömmlicher Art und Weise erfolgen, beispielsweise mit einer zusätzlichen Zugentlastung und einer Kabeltülle. Wesentlich ist, dass der Schirmungsleiter 8 in elektrischem Kontakt mit der Beschichtung 22b ist, so dass die Beschichtung 22b zumindest teilweise den Strom des Schirmungsleiters 8 über das Gehäuse 20 leitet.

Zur Vergrößerung des effektiven Leitungsquerschnitts wird die Bypassleitung 32 ebenfalls im elektrischen Kontakt mit dem Schirmungsleiter 8 gebracht. Hierzu kann beispielsweise über einen Anschlussbolzen 40a an einer Anschlussfahne 40 die Bypassleitung 32 befestigt sein. Beidseitig der Kabeldurchführung 28, jedoch zumindest an einer Außenseite der Kabeldurchführung 28 kann das Kabel 2 die äußere Isolation 10 aufweisen.

Durch die gegenständliche Anordnung der Bypassleitung im Gehäuse, kann der effektive Leitungsquerschnitt des Schirmungsleiters beschichteten Gehäusen erheblich vergrößert werden, so dass die Effektivität der Schirmung gegenüber bisherigen Lösungen erheblich verbessert ist.

### Bezugszeichenliste

- 2: Kabel
- 4: Ader
- 6: innere Isolation
- 8: Schirmungsleiter
- 10: äußere Isolation
- 12, 14: abisolierte Bereiche
- 20: Gehäuse
- 22: Grundkörper
- 22a: Wand
- 22b: Beschichtung
- 24: Verschlusskörper
- 26: Aufnahmevorrichtung
- 28: Kabeldurchführung
- 30: elektrisches Bauteil
- 32: Bypassleitung
- 40: Anschlussfahne
- 40a: Anschlussbolzen

## Patentansprüche

1. Baugruppe mit einem elektrisch geschirmten Gehäuse (20) mit
- einem ein Aufnahmevolumen für zumindest ein elektrisches Bauteil umschließenden Gehäusekörper (22, 24), und
- zumindest zwei an dem Gehäusekörper (22, 24) angeordneten, den Gehäusekörper durchbrechenden Kabeldurchführungen (28), wobei
- der Gehäusekörper (22, 24) aus einem Kunststoff gebildet ist und zumindest an einer seiner Mantelflächen mit einer metallischen Beschichtung (22b) beschichtet ist, und im Bereich der jeweiligen Kabeldurchführung (28) ein elektrischer Kontaktbereich (40) für einen Schirmungsleiter eines in die Kabeleinführung einführbaren Kabels gebildet ist, und **dadurch gekennzeichnet,**
- **dass** eine Bypassleitung (32) innerhalb des Gehäuses (20) geführt ist,
- **dass** die Bypassleitung (32) zwischen den Kabeldurchführungen (28) innerhalb des Aufnahmevolumens geführt ist und
- **dass** die Bypassleitung (32) mit dem Kontaktbereich (40) unmittelbar verbunden ist und so mit der metallischen Beschichtung (22b) elektrisch kurzgeschlossen ist.

2. Baugruppe nach Anspruch 1,
**dadurch gekennzeichnet,**
- **dass** die Bypassleitung (32) im Inneren des Aufnahmevolumens von einem Isolator umgeben ist.

3. Baugruppe nach einem der vorangehenden Ansprüche,
**dadurch gekennzeichnet,**
- **dass** die innere Mantelfläche einer jeweiligen Kabeldurchführung (28) metallisch beschichtet ist.

4. Baugruppe nach einem der vorangehenden Ansprüche,
**dadurch gekennzeichnet,**
- **dass** der Gehäusekörper (22, 24) an seiner inneren Mantelfläche und/oder seiner äußeren Mantelfläche mit der metallischen Beschichtung (22b) beschichtet ist.

5. Baugruppe nach einem der vorangehenden Ansprüche,
**dadurch gekennzeichnet,**
- **dass** die metallische Beschichtung (22b) elektrochemisch aufgebracht ist.

6. Baugruppe nach einem der vorangehenden Ansprüche,
**dadurch gekennzeichnet,**
- **dass** der Gehäusekörper (22, 24) aus einem Grundkörper (22) und einem Verschlusskörper (24) gebildet ist und dass der Verschlusskörper (24) mit dem Grundkörper (22) zumindest formschlüssig verbindbar ist.

7. System mit einer Baugruppe nach einem der vorangehenden Ansprüche, einem elektrischen Bauteil im Inneren des Gehäuses sowie zumindest einem elektrischen Kabel (2), das durch die Kabeldurchführung (28) in das Innere des Gehäuses (20) geführt ist und das mit dem elektrischen Bauteil verbunden ist, **dadurch gekennzeichnet,**
- **dass** das Kabel (2) im Bereich zumindest einer der Kabeldurchführungen (28) von einer äußeren Isolation befreit ist und dass ein in diesem Bereich liegender Schirmungsleiter (8) des Kabels (2) an zumindest einer der Kabeldurchführungen (28) mit sowohl der metallischen Beschichtung (22b) des Gehäuses als auch mit der Bypassleitung (32) elektrisch kontaktiert ist.

## Claims

1. Assembly with an electrically shielded housing (20) having
- a housing body (22, 24) enclosing a accommodation volume for at least one electrical component, and
- at least two cable bushings (28) arranged on the housing body (22, 24) and cutting through the housing body, wherein
- the housing body (22, 24) is formed from a plastic and is coated with a metallic coating (22b) at least on one of its lateral surfaces, and an electrical contact region (40) for a shielding conductor of a cable which can be introduced into the cable entry is formed in the region of the respective cable bushing (28), and - **characterized in**
- **that** a bypass line (32) is guided inside the housing (20),
- **that** the bypass line (32) is guided between the cable bushings (28) within the accommodation volume, and
- **that** the bypass line (32) is directly connected to the contact region (40) and is thus electrically short-circuited to the metallic coating (22b).

2. Assembly according to claim 1,
**characterized in**
- **that** the bypass line (32) is surrounded by an insulator inside the accommodation volume.

3. Assembly according to any one of the preceding claims,
**characterized in**
- **that** the inner lateral surface of a respective cable bushing (28) is metallically coated.

4. Assembly according to any one of the preceding claims,
**characterized in**
- **that** the housing body (22, 24) is coated with the metallic coating (22b) on its inner lateral surface and/or its outer lateral surface.

5. Assembly according to any one of the preceding claims,
**characterized in**
- **that** the metallic coating (22b) is applied electrochemically.

6. Assembly according to any one of the preceding claims,
**characterized in**
- **that** the housing body (22, 24) is formed from a base body (22) and a closure body (24), and in that the closure body (24) can be connected to the base body (22) at least in a form-fitting manner.

7. System having an assembly according to any one of the preceding claims, an electrical component in the interior of the housing, and at least one electrical cable (2) which is guided through the cable bushing (28) into the interior of the housing (20) and which is connected to the electrical component, **characterized in**
- **that** the cable (2) is stripped from an external insulation in the region of at least one of the cable bushings (28), and in that a shielding conductor (8) of the cable (2) lying in this region is electrically contacted at at least one of the cable bushings (28) both with the metallic coating (22b) of the housing and with the bypass line (32).

## Revendications

1. Assemblage avec un boîtier (20) blindé électriquement avec
- un corps de boîtier (22, 24) entourant un volume de réception pour au moins un composant électrique, et
- au moins deux passages de câbles (28) arrangés sur le corps de boîtier (22, 24) et traversant le corps de boîtier, où
- le corps de boîtier (22, 24) est formé d'une matière plastique et est revêtu d'un revêtement métallique (22b) au moins sur l'une de ses surfaces enveloppante, et dans la zone du passage de câble respectif (28) est formée une zone de contact électrique (40) pour un conducteur de blindage d'un câble introduisable dans le passage de câble, **caractérisé en ce**
- **qu'**une ligne bypass (32) est guidée à l'intérieur du boîtier (20),
- **que** la ligne bypass (32) est guidée entre les passages de câble (28) à l'intérieur du volume de réception et
- **que** la ligne bypass (32) est reliée directement à la zone de contact (40) et est ainsi court-circuitée électriquement avec le revêtement métallique (22b).

2. Assemblage selon la revendication 1,
**caractérisé en ce**
- **que** la ligne bypass (32) est entourée d'un isolant à l'intérieur du volume de réception.

3. Assemblage selon l'une des revendications précédentes,
**caractérisé en ce**
- **que** la surface enveloppante intérieure d'unepassage de câble (28) respective est revêtue d'un métal.

4. Assemblage selon l'une des revendications précédentes,
**caractérisé en ce**
- **que** le corps de boîtier (22, 24) est revêtu du revêtement métallique (22b) sur sa surface enveloppante intérieure et/ou sa surface enveloppante extérieure.

5. Assemblage selon l'une des revendications précédentes,
**caractérisé en ce**
- **que** le revêtement métallique (22b) est appliqué électrochimiquement.

6. Assemblage selon l'une des revendications précédentes,
**caractérisé en ce**
- **que** le corps de boîtier (22, 24) est formé d'un corps de base (22) et d'un corps de fermeture (24) et que le corps de fermeture (24) est reliable au corps de base (22) au moins par liaison de forme.

7. Système avec un assemblage selon l'une des revendications précédentes, un composant électrique à l'intérieur du boîtier ainsi qu'au moins un câble électrique (2) qui est guidé à l'intérieur du boîtier (20) par le passage de câble (28) et qui est relié au composant électrique,
**caractérisé en ce**
- **que** le câble (2) est exempt d'une isolation extérieure dans la zone d'au moins l'un des passages de câble (28) et qu'un conducteur de blindage (8) du câble (2) situé dans cette zone est en contact électrique, au niveau d'au moins l'un des passages de câble (28), à la fois avec le revêtement métallique (22b) du boîtier et avec la ligne bypass (32).
